# EUROPEAN PATENT APPLICATION

(11) **EP 3 690 680 A1**
(43) Date of publication of application: **05.08.2020**
(21) Application number: 18789559.4
(22) Date of filing: 23.08.2018
(51) Int. Cl.: G06F 17/50, G06Q 10/06

(54) **METHOD OF AUTOMATED DESIGN AND ANALYSIS OF SECURITY SYSTEMS**

(30) Priority: 25.09.2017 RU 2017133220
(71) Applicant: Limited Liability Company "Complex Systems", Moscow 143026 (RU)
(72) Inventor: KRYLOV, Viktor Mikhailovich, St. Petersburg 195027 (RU)
(74) Representative: Glawe, Delfs, Moll
(86) International application number: PCT/RU2018/050102
(87) International publication number: WO 2019/059816

(57) **Abstract**

The invention belongs to the field of facility protection against unauthorised intrusion, namely to methods of digital calculations and data processing specially designated for physical protection system design and analysis. The technical result of the claimed invention is improvement of safety system design efficiency and analysis completeness due to integrated approach to simulation of maximum possible number of factors (elements) that influence on efficiency estimation of facility protection against unauthorised intrusion. Wherein the result is achieved by mathematical simulation with no need for conducting of full-scale experiments on the ready facility. Within the method of computer-aided design and analysis of physical protection systems and the whole safety system libraries of dynamic mathematical models of technical security equipment, engineering security means, intruders and security service are created, the model of the facility to be guarded is created, in the territory of the facility to be guarded elements of technical security equipment and engineering security means are created, security service dynamic mathematical model is set, threat dynamic mathematical model is created, within the scope of which intruders dynamic mathematical models are set, simulation is carried out, and then facility vulnerability assessment is created. 1 independent claim, 7 dependent claims, 43 figures.

## Description

The invention belongs to the field of facility protection against unauthorised intrusion, namely to methods of digital calculations and data processing specially designated for physical protection system design and analysis.

The following terms and acronyms are used in the description.

**Dynamic mathematical model** is a mathematical model that provides the description of occurrence of actions that should alternate as per the known sequence.

**Perimeter security system (PSS)** is an array of tools for assurance of perimeter physical protection against intrusion and detection of perimeter breach. PSS includes closed-circuit television systems, security service, rules and regulations for employees, detectors, annunciators, barriers, physical protection means (trenches, dams, ditches, concrete pillars, barbed wire, etc.), alert signal acquisition and process systems and many other systems intended to ensure execution of the set task of perimeter guarding.

**Safety system of an object** is a set of all methods and means that maintain safe condition inside the perimeter, prevent, detect and eliminate life, health, environment, property and information, having general means for information acquisition and processing and control.

**Physical protection systems (PPS)** are a set of legal regulations, organizational measures, engineering and technical solutions aimed at protection of vital interests and resources of the enterprise (facility) against any threats, sources of which are malicious (unauthorized) physical actions of individual persons - intruders: terrorists, criminals, extremists, etc.

**Integrated security system (ISS)** is a set of technical and software tools for maintenance of safe condition, prevention, detection, counteraction and elimination of a set of threats to the subject of safety assurance. It is a **component** part of PPS, but not complete.

**Security equipment (SE)** is a set of guard technical means. It is included in the set of engineering and technical security means (ETSM), intended to improve outer border security efficiency of facilities of various purposes. SE includes sensors, detectors, video cameras of the closed-circuit television system (CCTV), software tools for video analytics (VA), etc. SE is directly related to ISS - is its structural part, describing technical means.

**Engineering security means (ESM)** are a set of security engineering means aimed at physical control of occurring threats. ESM includes fences, barriers, trenches, antiundermining foundations and other physical barriers that impede their illegal passing.

**Technical security equipment set (TSE, TSE set)** is a set of SE and ESM in a single interacting system.

**Detection zone,** sensor sensitivity zone (SSZ) is a zone where a sensor is capable to detect probable intrusion. In case of detection of any foreign objects or disturbances within SSZ, a sensor is capable to generate alert signal with certain probability. The better a sensor, the more reliable and faster alert signal is generated by it.

**Response unit (RU)** is a facility security service personnel mobile group that neutralize a threat occurred: intruder interception, investigation of the alert signal source area, physical control of intruders, guarding of the important targets, etc.

**Patrol** is a group of safety system personnel, that cyclically patrol a facility, make round and check area of the facility to be guarded.

**Security operator** is an employee (employees) of the facility security service who monitors alerting system on the guard post. Guard post operator can identify threats and make a decision concerning alert raising: sound the alert or consider it false.

**Video surveillance system operator (CCTV operator)** is an employee (employees) of the facility security service who monitors the territory using video camera (CCTV). Can identify a threat, make a decision on alert raising, monitor an intruder using CCTV, provide intruder location for RU for his/her neutralization.

**Closed-circuit television (CCTV)** is a set of security equipment intended to ensure constant visual control over the space covered by the video surveillance system.

**Video analytics (VA)** is firmware or technology that uses methods of computer vision for automated data acquisition on the basis of streaming video analysis. The tasks of facility security system: detection, identification, monitoring.

**Intruder** is a person who intrudes the guarded facility territory. Can be accidental, dilettante, trained, etc. Various models of an intruder describe features of his/her behavior and respond to ISS structure.

**API** (application programming interface) is a set of pre-defined classes, procedures, functions, structures and constants provided by applications or the operating system for using in external software programs.

**Program (Project) Evaluation and Review Technique (PERT)** is a project evaluation and analysis method that is used for project management.

To achieve targets of safety assurance on the facility to be guarded it is necessary to solve the following range of tasks:
- Physical preventing of unauthorized person intrusion to the facility. It is a task of facility access limitation for unauthorized persons using various methods: warning signs, fences, security checkpoints, etc. It enables to avoid most cases of accidental or intended intrusion.
- Maximum possible intruder intruding speed reducing is a task of various perimeter security equipment to reduce intruder speed of motion towards to the intrusion target. This is one of the most important task as intruder interception capability mainly depends on it. The longer delay time on each PPS element, the more possibilities to react for the whole system. Each PPS element is capable to counteract guarded facility intrusion using the specific set of methods. E.g. razor wire cannot protect against vehicle ramming, but concrete fence can protect.
- Intrusion detection is a task to be solved by the applied SE and the facility security service in case of actual detection of an intruder on the facility. Detection tasks are carried out by annunciators (various sensory devices), video cameras of CCTV with VA, CCTV operators, patrols, etc.
- Identification is a task of identification of a threat that occurs on the facility. A threat can be caused by intrusion of an accidental intruder, false sensory devices triggering caused by personnel, a single thief, a terrorist group, etc. Identification of an intruder and a threat influences on decision making and actions of the security service and RU.
- Preparation and adoption of decision is a task of creation of the correct decision program with regard to causes of alert on the facility. The following actions of a security operator, response unit, CCTV operators, etc. depend on the decision made.
- Bring a decision to execution is a task of actual command and instruction distribution from the guard post to end executing persons: technical means, response unit, patrols, etc. Correct and timeliness of execution of command depends on many factors.
- Intrusion prevention: interception or any other threat neutralization is a fundamental task and actual events' outcome depends on executing this task. Interception success and security of the facility to be guarded will depend on the quality of execution of all previous tasks and implementation of the task of intrusion prevention.

Facility vulnerability and protection estimate will depend on the quality of each task implementation. This estimate can be obtained by different methods: expert estimate (subjective), actual experiments (unreasonable as the system has been already built), using a computational experiment at design stage (claimed method).

The most similar analogue of the claimed invention is the technical solution from the patent RU 2219576, related to the method of facility integrated security system. The method assumes sensor location in the facility territory so the detection zone is created for each sensor. Then, simulation is carried out when points of disturbance occurrence (intrusion occurrence) are generated. Wherein sensors respond or do not respond to disturbance on the basis of two factors: the first factor - if a disturbance point is located within the sensor detection zone, and the second factor is that sensors respond or do not respond depending on the probability of sensor triggering. Finally, results are formed: probability of intruder detection over the whole facility territory.

However, this solution describes executing a task only partially as only static estimate of the sensor system operation is provided. Wherein the reason of disturbance origin (an actual intruder, weather conditions, false alert, etc.) is not considered, interaction between sensors and various facilities is not described, interaction between hypothetical intruders and sensors (an attempt to avoid a sensor, to break it, etc.) is not described, other technical means (CCTV, radio locators, etc.) are not simulated, probability of intruder detection by security service personnel and other tasks are not considered. Thus, facility vulnerability and protection estimate cannot be considered completely.

The patent RU 2219576 describes highly specialized quality assessment field of sensor net that can be located within the model field and detection zone of which can be changed in the course of studying. Wherein the facility where this net is implemented is taken into account: room, the first floor, street. The created project is studied by generation of pseudorandom numbers to form occurrence of testing actions at random point within the model space (in the plane). It means that in the facility territory flat detection zones are created where disturbance occur randomly. This disturbance can occur both within the sensor sensitive zone and outside it.

Thus, from the list of tasks to be solved to ensure safety and to create facility protection estimate (facility vulnerability estimate) the patent RU 2219576 only describes the method for estimation of intruder detection fact. Wherein "disturbance" can occur not only on the facility border, but also inside the facility, that is complete failure of the security service in this case, as an intruder is detected deep inside the facility territory.

The technical problem to be solved by the claimed invention is creation of a method that ensures integrated computer-aided design and analysis of physical protection system efficiency and the whole safety systems, including not only technical means, but the security service too.

The technical result of the claimed invention is improvement of safety system design efficiency and analysis completeness due to integrated approach to simulation of maximum possible number of factors (elements) that influence on efficiency estimation of facility protection against unauthorised intrusion. Wherein the result is achieved by mathematical simulation and there is no need for carrying of full-scale experiments on the facility.

The said technical result is achieved by the fact that for the method of computer-aided design and analysis of physical protection systems libraries of dynamic mathematical models of technical security equipment, engineering security means, intruders and security service are created, the model of the facility to be guarded is created, in the territory of the facility to be guarded elements of technical security equipment and engineering security means are created, security service dynamic mathematical model is set, threat dynamic mathematical model is created, within the scope of which intruders dynamic mathematical models are set, simulation is carried out, and then facility vulnerability estimate is created.

After creation of facility vulnerability estimate dynamic mathematical models of technical security equipment, engineering security means and security service can be updated within the method.

Facility plan project can be exported to the elements of the design documentation within the method.

Mathematical models of the specific areas and infrastructure can be additionally created within the method.

The method can take into account expert trajectories and/or random trajectories of intruder and/or security service motion.

Actual operating element of technical security equipment, engineering security mean, intruder and security service can be used as a dynamic mathematical model of technical security equipment, engineering security mean, intruder and security service within the method.

As opposed to point generation of disturbances in the sensor sensitivity zone used to obtain static pattern of the sensor detection capacity like in the most similar analogue, the claimed invention provides full set of studies and estimate of threats occurred due to any reasons, Wherein studies are carried out in real-time and with all factors interacting with each other.

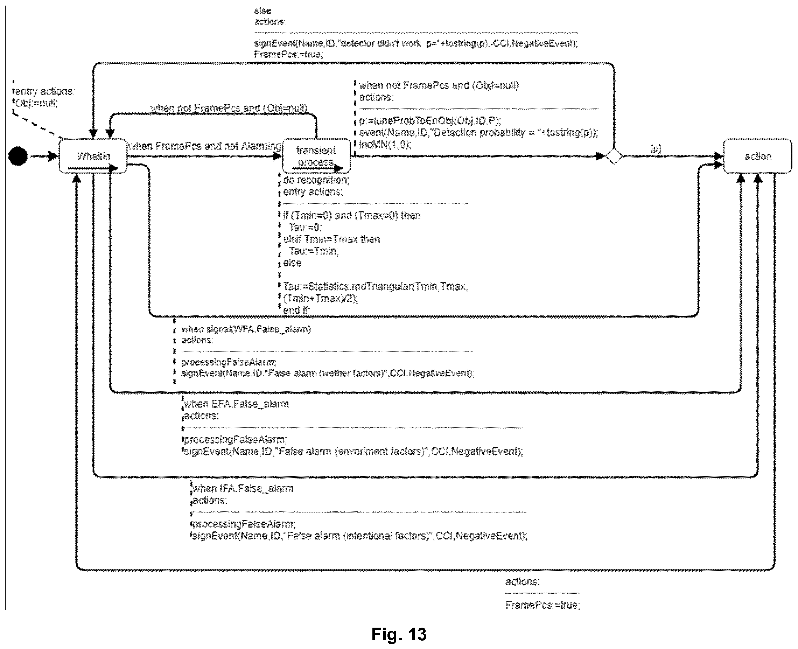

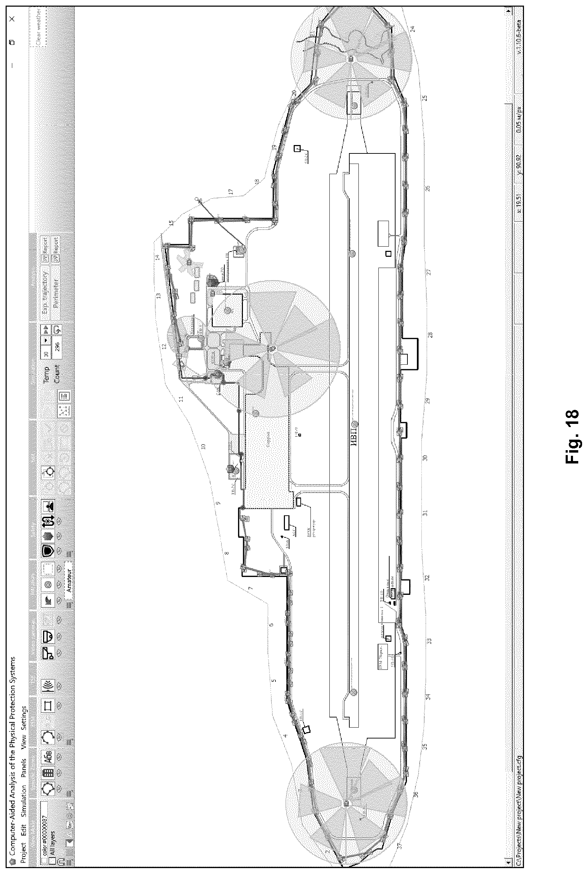

The claimed invention is illustrated by Figures 1-43 where the following is shown:
Fig. 1 - intruder motion trajectory;
Fig. 2 - simulation environment interface for the abstract hybrid class " 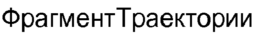 " (TrajectoryFragment);
Fig. 3 - simulation environment interface for the abstract hybrid class 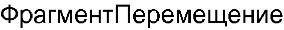 " (MotionFragment);
Fig. 4 - simulation environment interface for the local class " 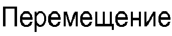 " (Motion);
Fig. 5 - simulation environment interface for the abstract hybrid class " 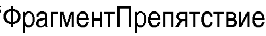 " (BarrierFragment);
Fig. 6 - trajectory representation as a sequence of states;
Fig. 7 - simulation environment interface for the abstract hybrid class " 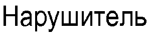 " (Intruder);
Fig. 8 - simulation environment interface for the continuous class " 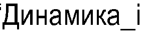 " (Dynamics_i);
Fig. 9 - map of " 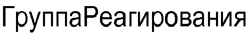 " (Response Unit) class behavior;
Fig. 10 - simulation environment interface for the abstract hybrid class " 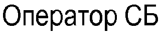 " (Security Operator);
Fig. 11 - map of " 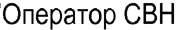 " (CCTV operator) class behavior;
Fig. 12 - simulation environment interface for the abstract hybrid class " 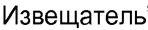 " (Detector);
Fig. 13 -- map of " 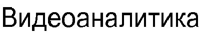 " (Video content analysis system (VCA))
Fig. 14 - map of " 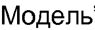 " (Model) class behavior;
Fig. 15 - simulation environment interface for the function " 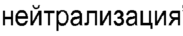 " (neutralization);
Fig. 16 - window for creation of a new project of graphical user interface;
Fig. 17 - window for model parameter setting of graphical user interface;
Fig. 18 - example of the loaded drawing of " 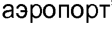 " (airport) project;
Fig. 19 - facility plan;
Fig. 20 - graphical user interface for new project creation;
Fig. 21 - graphical user interface for element settings;
Fig. 22-26 - graphical user interface for facility element setting;
Fig. 27 - graphical user interface for selection of an intruder model;
Fig. 28 - graphical user interface for simulation process;
Fig. 29 - graphical user interface for simulation calculation ending;
Fig. 30 - graphical user interface showing simulation calculation result;
Fig. 31 - graphical user interface showing a report;
Fig. 32 - graphical user interface showing with an added detector;
Fig. 33 - graphical user interface showing simulation calculation result with an added detector;
Fig. 34 - graphical user interface to take into account random trajectories;
Fig. 35 - graphical user interface for building of large intrusion perimeter;
Fig. 36 - graphical user interface of large intrusion perimeter per sections;
Fig. 37 - graphical user interface for simulation of large intrusion perimeter per sections;
Fig. 38 - graphical user interface showing calculation result of simulation of over 2,000 tests;
Fig. 39 - graphical user interface showing calculation result of simulation of over 5,000 tests;
Fig. 40 - graphical user interface showing intrusion trajectories;
Fig. 41 - graphical user interface for facility update;
Fig. 42 - graphical user interface showing calculation result of simulation of over 13,000 tests for the updated facility;
Fig. 43 - graphical user interface showing calculation result of simulation of over 14,000 tests for the updated facility;

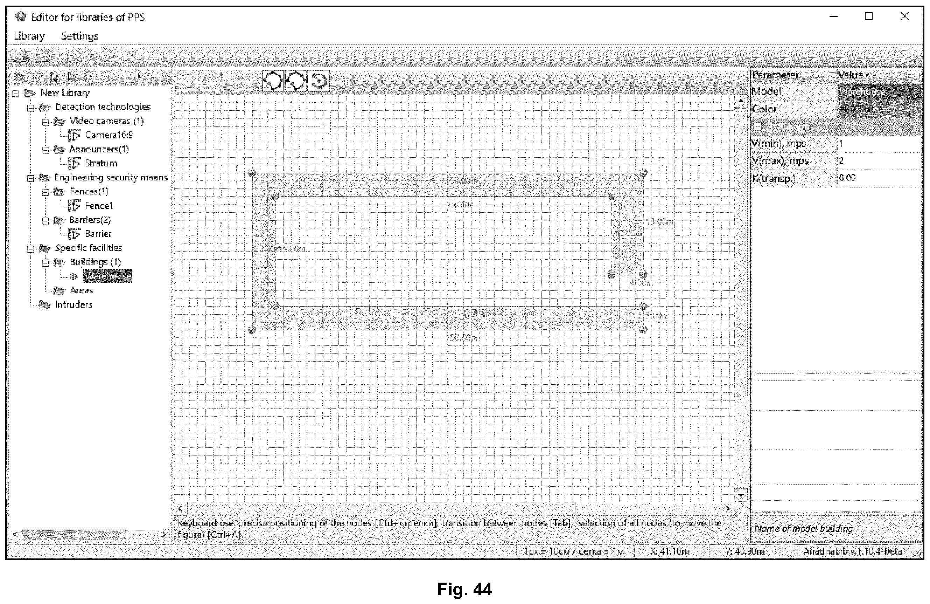

Fig. 44 - graphical user interface of the individual editor for system element models' setting.

The method is carried out as follows.

First of all, preparatory stage is carried out at which libraries of dynamic mathematical models of various SE (not only sensors), ESM, specific areas, infrastructure, intruders' models, etc, are created.

The stage of guarded facility creation as a drawing or a plan is carried out using available design elements: original drawing, library elements of the specific areas and infrastructure.

The stage of creation of ESM elements in the territory of the facility to be guarded assumes location of fences, barriers, etc. At the stage of guard detection system creation in the territory of the facility to be guarded detectors of various types and purposes (sensors) are located on fences, underground, above ground from the open shed, etc. and video cameras of various types (tilt, stationary, with/without VA system) are also located.

Then, warning and alert systems are created: loud speakers, flood lights, signs.

At the facility security service structure creation stage the following models are set: security operator; CCTV operators; RUs, their location and priority motion trajectories towards hypothetical intrusion targets; patrols and their trajectories.

At the threat model creation stage models of an intruder, expert intrusion trajectories, areas and zones of external intrusion (occurrence of an intruder within a randomly selected area outside the facility), areas and zone of internal intrusion (occurrence of an internal intruder within a randomly selected area in the occurrence zone) and interest and intrusion targets are created, i.e. places where intruders can forward.

At the simulation stage the following is carried out: dynamic simulation of various models of various intruder models' motion along the expert or random intrusion trajectories; study of detection system operation; study of PSS interception capacity; study of the probability of success intruder interception before this intruder reaches his/her target; static data are generated on the basis of multiple tests.

At the stage of automated facility vulnerability estimate creation and analysis the facility vulnerability estimate is created using various criteria on the basis of the obtained statistical data, analysis of the obtained estimates is carried out and recommendations are provided.

Then, the plan of PPS and, particularly, PSS in the territory of the facility is corrected and updated on the basis of the estimation results and analysis recommendations. This stage is repeated until the facility protection project that meets all requirements is created.

Then the final project acceptance stage is carried out to create the design documentation.

At the stage of facility plan project export to the elements of the design documentation various facility plan drawings are prepared indicating the required elements (ESM, SE, etc. together or individually) and the specifications of used elements are created for the design documentation.

This process can be cyclic and have several solution options.

Software application implemented using the claimed method consists of two independently starting programs: PPS design and intrusion simulation environment and element library editor.

The facility drawing in .dxf format can be loaded from AutoCAD to the simulation environment. This drawing is a facility map in which you can draw as in a work field or locate ESM, SE, infrastructure elements, etc. from the library. Also, in this plan you can place user (expert) intrusion trajectories, intruder occurrence zones, etc. Using various combinations of PPS elements (locating of various types of fences, security borders creation, disposition of cameras and detectors, etc.) you can obtain an unique structure in the facility. This structure can be subject to many computational experiments in order to study intruder intrusion to the facility territory at the stated points. All computational experiments re carried out in the environment using a mathematical simulation program block. Simulation results are output as visualization of intruder motion over the facility map and recorded in the program event log.

Computational experiments can be carried out by several criteria and conditions: intrusion along the expert trajectory, intrusion from the selected perimeter zone of intruder occurrence, intrusion from all directions of the intruder occurrence perimeter. Results of all experiments are recorded to a history file. The selected experiments of interest can be displayed.

Results of each series of computational experiments are output to a report file with detailed analysis. On the basis of obtained results the following estimates are created: SE timely respond probability estimate, estimate of intruder interception using ESM, probability estimate of intruder intercept by the facility response unit. Depending on the selected study criterion probability histograms of intrusion from all intruder occurrence perimeter areas can be output to the report.

All elements on the facility map in the environment are used during computational experiments and influence on a final result. Elements can be created on the plan greenfield, e.g. draw and set their parameters and also you can use ready elements from the libraries and place them on the plan. Wherein there is the possibility to change parameters, sensor detection zone shapes, sensor location.

You can create the element library using the element library editor. There are several categories in it: ESM, SE, infrastructure, intruders, etc. In each category you can create an element with physical, geometrical, probabilistic and logic parameters to be set by the user. Thus, data base of frequently used elements is created with unique set of parameters: various types of video cameras, detector models, fence types.

Each element created in the data base, has its own set of parameters. For each element category sets of parameters are different. Thus, e.g. a fence has timing crossing characteristics, transparency factor, ramming resistance properties, etc.

### Examples of specific implementation.

The software product Rand Model Designer is used as the simulation environment.

We proposed simultaneous intrusion of a single intruder of "an intruder with a single specific target" type. In this case each model start takes place when an intruder occurs on the perimeter and ends when an intruder is neutralized or an intruder reaches the intrusion target.

To simulate an intruder the condition must be adopted that he/she can move along either known trajectory (expert trajectory drawn by the user) or along the shortest trajectory from a random occurrence point towards to the target provided that insurmountable obstacles are avoided. When moving along this random trajectory and in case an intruder reaches the expert trajectory he/she continues to move along it.

PPS simulation was carried out in two modes: visualization mode ("training simulator" mode) and PPS effectiveness indices calculation mode.

In visualization mode all motions of an intruder and a response unit and discrete events occurring in a model (occurrence of the alert signal, etc.) are continuously displayed on the PPS plan using visual editor. Also, there is the possibility of user interactive intervention to model operation. Simulation result in this mode is an user's subjective estimation of building correctness and efficiency of the PPS option under study.

In PPS effectiveness indices calculation mode a computational stochastic experiment is carried out, when a confidential interval [*pₘᵢₙ,pₘₐₓ*] is defined using Monte-Carlo method by multiple simulation runs, in which the value *p* (probability of success operation (effectiveness) of PPS under study) is determined with a probability P. Having carried out calculations in this mode for various values of PPS parameters you can obtain the function of PPS effectiveness and its elements' parameters' values. It is also provided the possibility of automatic building of parametric dependences and estimate of PPS effectiveness sensitivity to parameter values.

Simulation model includes at least four parallel processes that independently evolving in model time and interacting between each other: intruder action model, operator action model, monitor (operator, who view cameras' images cyclically) action model, response unit action model.

Besides, for each PPS element used in the given run and having its own functionality, e.g. detector with a transient process of alert signal generation, its own independent process is started evolving in time.

### Intruder action model.

Intruder motion trajectory is set by a zigzag line. Intruder motion ends in the following cases: if an intruder reaches the target - the trajectory end point, if an intruder is intercepted by the response unit. It is assumed that success interception takes place when an intruder and the response unit approach to each other to a distance that is less then the specified R.

All motion trajectory points connecting it into zigzag line are points of change in motion direction or, if they are on the straight line section, are intersection points of the special area border. Special area border intersection point means: entering and leaving the detector or camera sensitivity area, start and end of crossing, crossing of the border of terrains with speed limitation and motion target reaching.

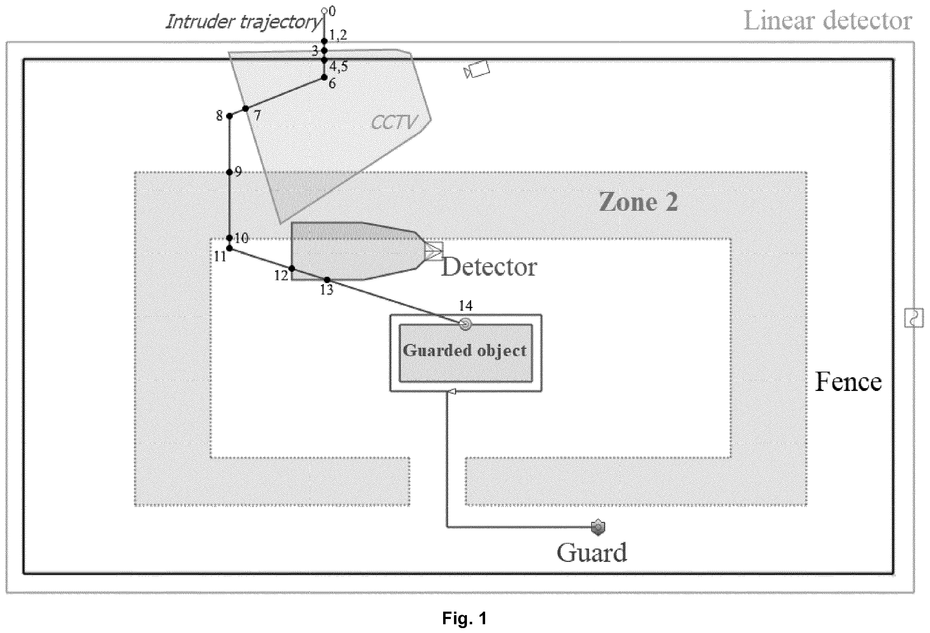

Intruder motion trajectory (fig. 1) contains 14 specific points: 0 -origin of the trajectory, 14 - trajectory end (target reaching), points 1 and 2 - points of entering and leaving linear detector sensitivity area, points 4 and 5 - crossing start and end points, points 6, 8 and 11 - points of change in motion direction, points 9 and 10 - points of transition from one area to another. Thus, the motion trajectory consists of the fragments that can be of two types: fragments where motion is carried out, and fragments where crossing of various barriers or zones takes place.

When moving along the trajectory fragment that assumes only motion, an intruder moves with constant speed. Speed is determined by random selection within the range from minimum to maximum speed allowable for the given motion area. Motion speed is limited by the parameter of maximum allowable speed for an intruder. The specific speed value is determined at the initial fragment point using PERT method (definition of work duration using minimum and maximum expert estimate). This method assumes application of beta-distribution with relative thickest value of 0.4.

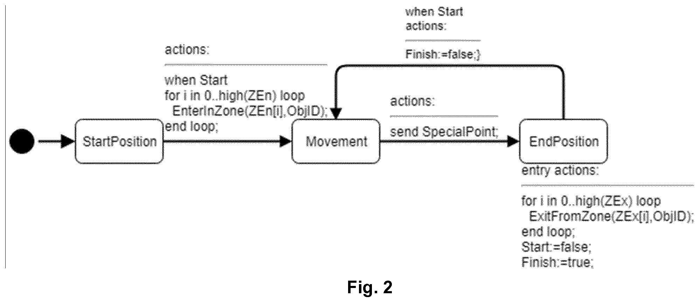

The abstract hybrid class " 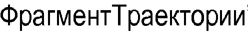 " (TrajectoryFragmet) is assigned to the trajectory fragment " 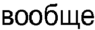 " (generally) (fig. 2).

X and Y outputs contain values of the current object coordinates, initial and final values of which are set by the respective parameters Three states are set in the behavior map, that correspond to the initial special point, section and end special point of the trajectory fragment.

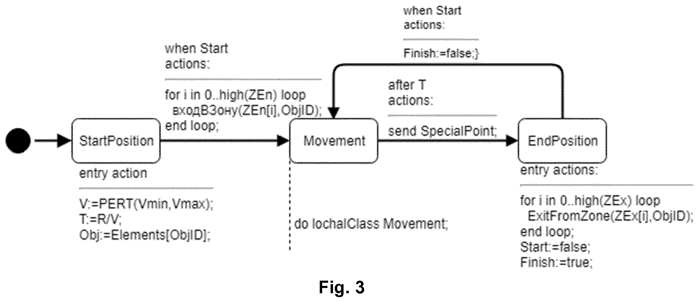

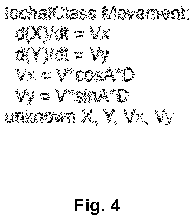

Then, the class " 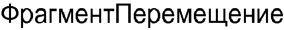 " (MotionFragment) is determined - a child object of the class " 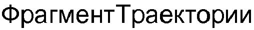 " (TrajectoryFragmet) (fig. 3). In this class additional parameters Vmin and Vmax - minimum and maximum motion speed - are set, some internal variables are added, and the behavior map is re-determined. In entry actions of the state " 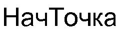 " (InPoint) motion speed V random value is determined and motion time T is calculated. Continuous activity is assigned to the state " 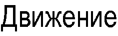 " (Motion) set by the local class " 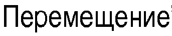 " (Movement) (fig. 4). Thus, during time interval T, while the state " 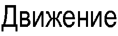 " (Motion) is a current condition, object coordinates X and Y continuously change according to the equations shown in Fig. 4.

Various values of Vmin and Vmax parameters correspond to motion over various terrains.

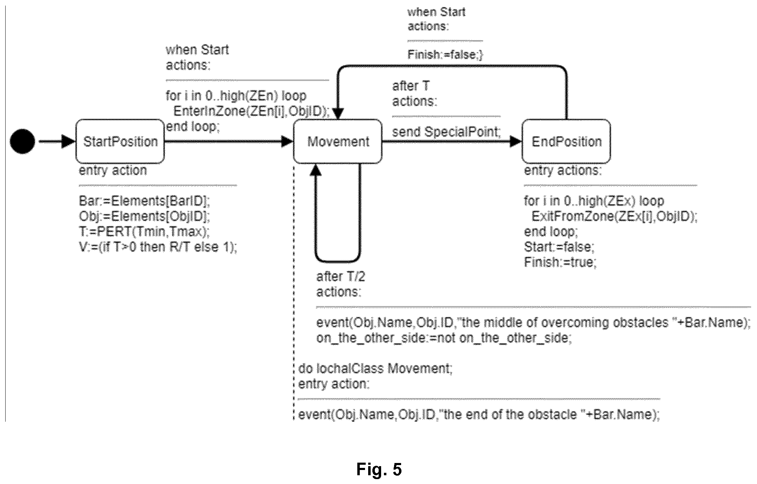

Then, the class " 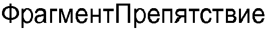 " (BarrierFragment) is determined - a child object of the class " 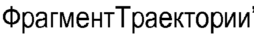 " (TrajectoryFragmet) (fig. 5). In this class additional parameters Tmin and Tmax - minimum and maximum crossing time - are set, some internal variables are added, and the behavior map is re-determined. In entry actions of the state " 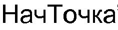 " (InPoint) a random value of crossing time T is determined. It is assumed that crossing is non-divisible action, and upon expiration of time T the current coordinates X and Y change abruptly in entry actions of the state " 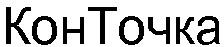 " (EndPoint) - take on final values.

Various values of parameters Tmin and Tmax correspond to various types of barriers (fences, trenches, etc.).

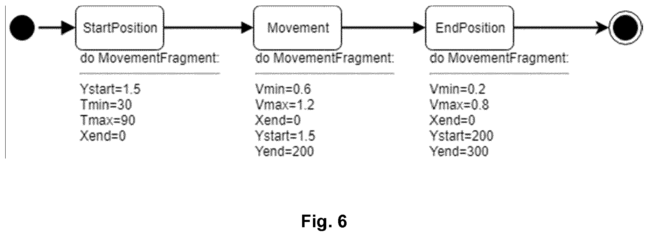

Thus, generally, the motion trajectory can be simulated as an execution sequence of trajectory fragments' models. The simplest solution is presentation of the trajectory fragments as individual states of the behavior map, to which instances of the respective classes are assigned as local activity (fig. 6).

However, in this case for each specific trajectory it will be necessary to generate a new specific executable model that will lead to significant complexity of the simulation module and decrease in productivity. More efficient solution is dynamic creation of objects and links required to simulate the specific trajectory.

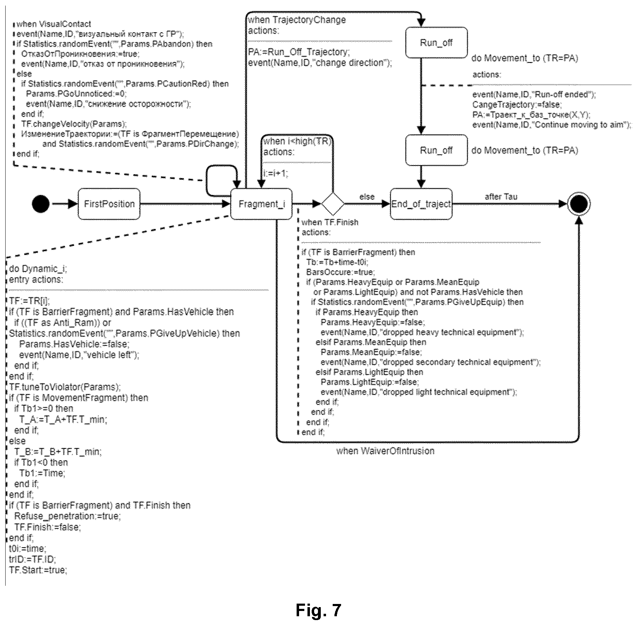

Fig. 7 shows the class " 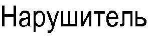 " (Intruder). There object references - child objects of the class " 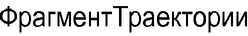 " (TrajectoryFragment) - in the dynamic array TR. These objects - instances of the class " 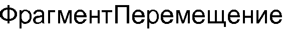 " (MovementFragment) or " 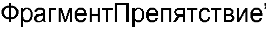 " (BarrierFragment) - are added to the array at the initial point of the run using externally visible procedures.

Motion along the trajectory is simulated as follows. From the array TR the current trajectory fragment is selected for the operating reference TF and the signal "Start", that start functioning of the respective object, is sent to it (fig. 2). Transition to the following fragment is carried out upon completion of operation of the current fragment - the behavior map of the TF object achieves final state.

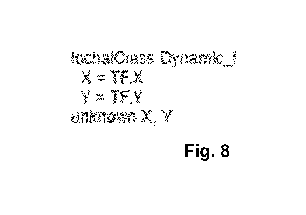

Continuous local activity " 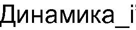 " (Dynamics_i) ensures continuous calculation of the current coordinates X and Y (fig. 8). Motion along the trajectory can be interrupted in case of intruder neutralization. In general, this event is generated in the behavior map.

### Response unit action model.

Response unit means a mobile group of security officers that moves forward when the alert signal is received in order to neutralize causes of this signal (in the given case to neutralize an intruder). As a first approximation, response unit tactics reduces to moving forward along the set trajectory to the desired intrusion target.

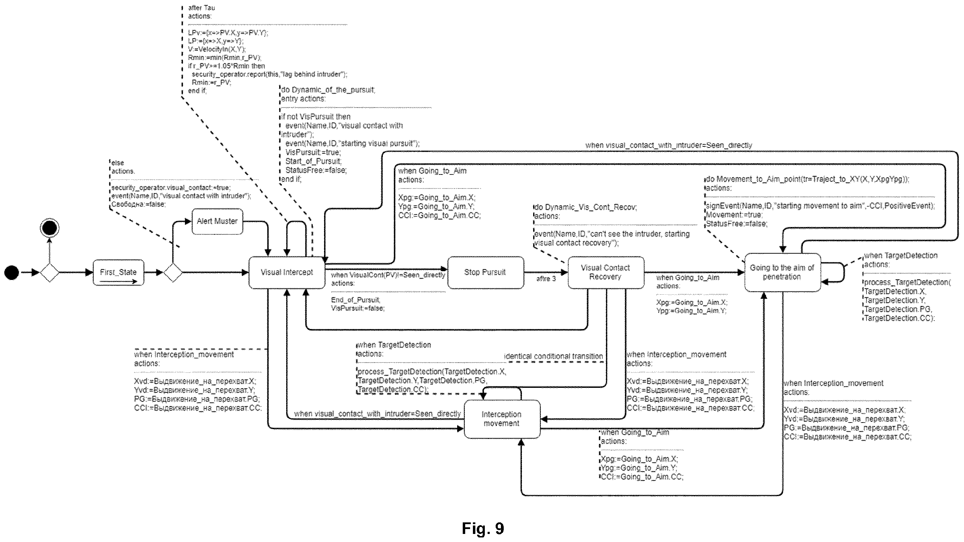

Having received the alert signal from a dispatch operator (security service operator on the facility), a response unit starts to move along the check trajectory with a specific delay set by minimum and maximum values. Motion along the trajectory is simulated similar to intruder motion (Fig. 9). When the response unit approaches an intruder to line-of-sight distance the unit stops to move along the program trajectory and starts interception of an intruder according to the method when a speed vector of the interceptor is always directed to an intruder.

### Operator action model.

An operator means a dispatch operator of the facility security service who monitors PPS sensors on the control panel. Also, he/she can inspect the territory using video cameras and monitor intruder motion.

In this case the model describes simplified sequence of actions. Having received the alert signal from any detector (in fig. 1 it is a signal from a linear detector when an intruder moves between points 1 and 2), a dispatch operator carries out the following actions: detects the required perimeter area and switches the image from the required video camera to the display; using video cameras inspects the area (in case of tilt cameras rotates these cameras); estimates a threat; in case of threat detection sends an alert signal to the response unit.

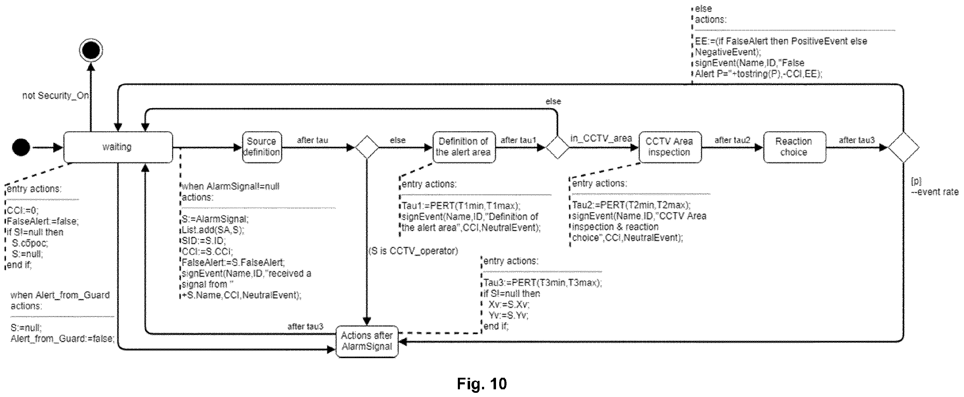

All actions of a dispatch operator take some time, set by minimum and maximum values. For threat estimation the probability of correct decision making P is set (fig. 10).

### Monitor model.

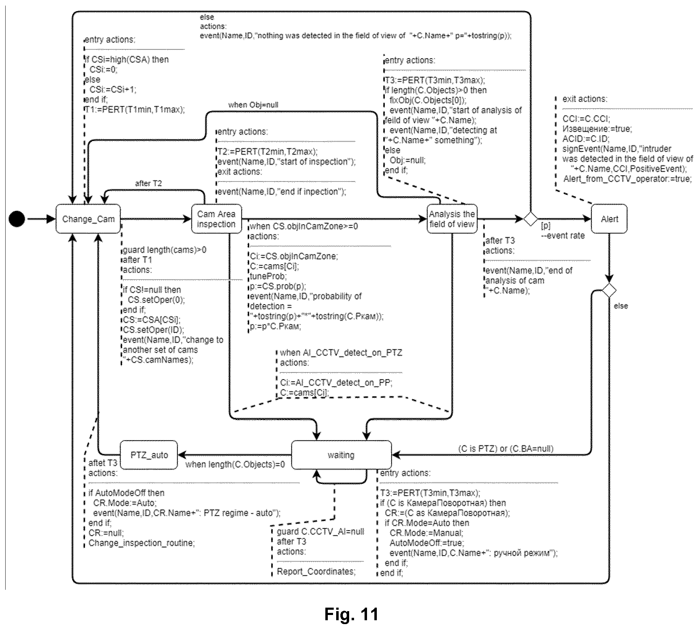

A monitor is a special operator who cyclically views images that are received from all cameras, and sends announcement signal similar to the detector signal if an intruder is detected within the camera area (fig. 11). An intruder is identified with a certain probability.

### Detector model.

A detector means the elements of technical security equipment that are capable to detect intrusion to their sensitivity areas. Detectors can be of various types and kinds, however, their general operation concept is as follows: in case of significant disturbances within the detector sensitivity area (vibration for vibration-sensitive detectors, changes in electromagnetic field for capacitive detectors, a barrier for optical light for optical detectors, etc.) the device generates the alert signal that is transmitted to the guard post or to the alert signal analysis and processing system.

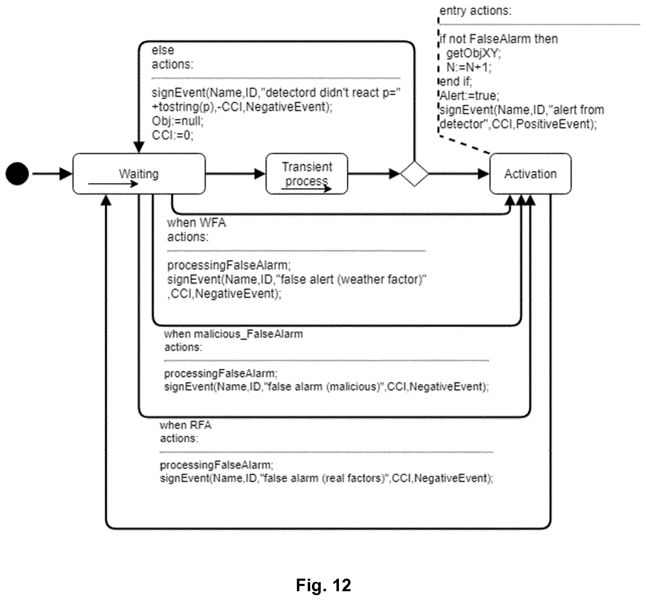

In a model it is implemented as follows: if an object occurs within the sensitivity area a potential alert signal is generated after a specific delay τ with probability P. Delay τ is distributed according to the triangle law. The signal is read out when an object leaves the sensitivity area (fig. 12), however the fact of alert raising is registered in the general system model.

### Model in general.

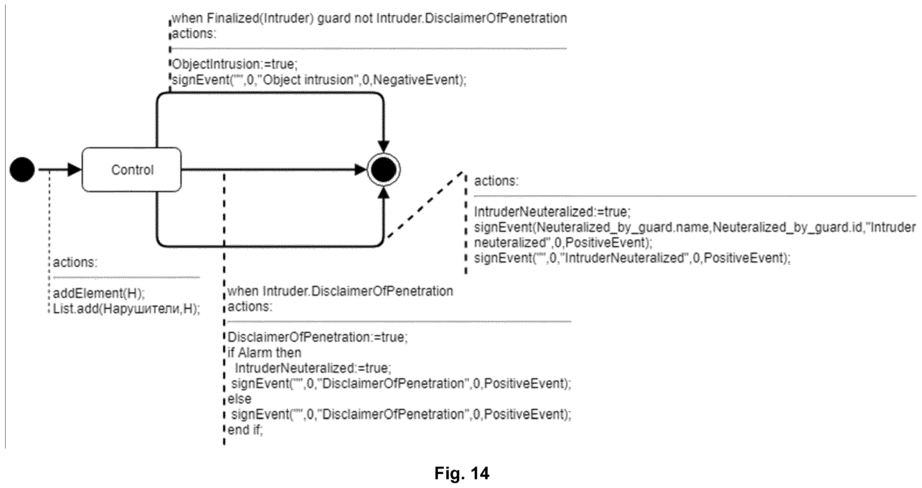

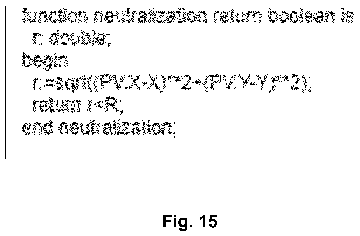

The general model (class " 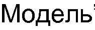 " (Model) contains at least three static objects: instances of the classes " 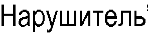 " (Intruder), " 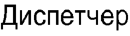 " (Dispatch operator) and " 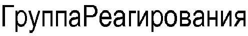 " (Response unit) and the required objects: models of detectors, surveillance camera, etc. The behavior map of the class " 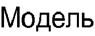 " (Model) monitors options of model run ending (fig. 14). Definition of the function " 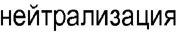 " (neutralization) is shown in fig. 15.

To implement simulation modelling the required software shell is created where PPS elements location conditions are set, parameters for PPS elements are set, motion trajectories for intruder and response unit models are stated and the required parameters are set for operator and monitor models.

PPS model is developed manually using RMD 7 Professional and placed to the software shell as a built-in model - model.dll.

PPS model includes definitions of standard classes and object instances that simulate an intruder, dispatch operator, response unit. The shell includes the simulation module: object of the class "p_Model" - a child object of the existing class "vm_Model", hiding low-level interface for work with an embedded model on the API level.

Preliminary the shell sends information on the intruder and response unit motion trajectories to the simulation module. On the basis of this information the simulation module creates all required additional dynamic objects and links in the model to be embedded by calling the respective "public"-methods of the existing objects.

In the visual simulation mode the simulation module promotes model time per the specified step or to the nearest discrete event and returns values of the current coordinates of an intruder and the response unit, as well as information on discrete events.

In the stochastic indices calculation mode the simulation module independently carries out stochastic calculation experiment and returns deliverables.

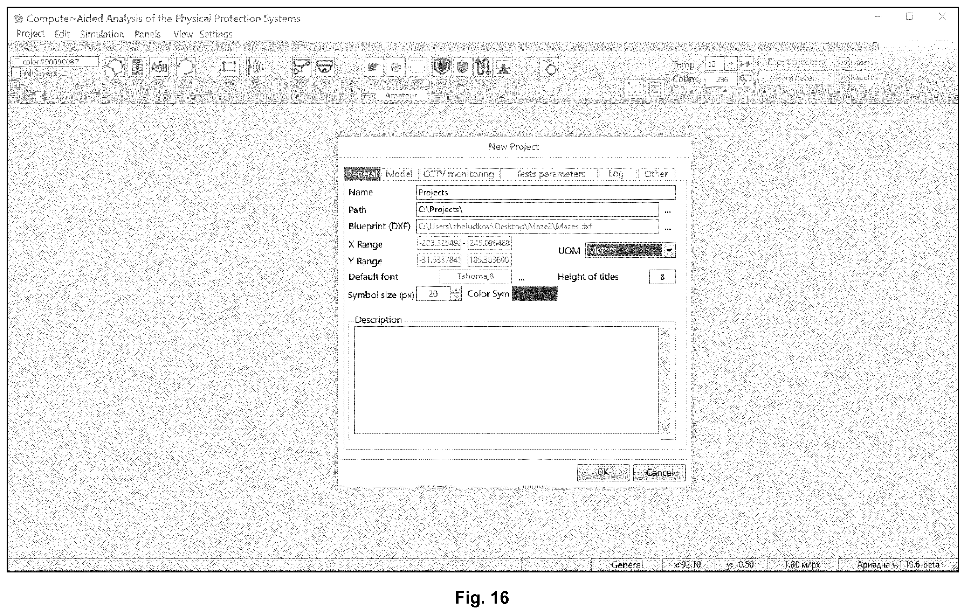

Fig. 16 shows the window for creation of a new project where you can load a drawing in common formats, e.g. DXF.

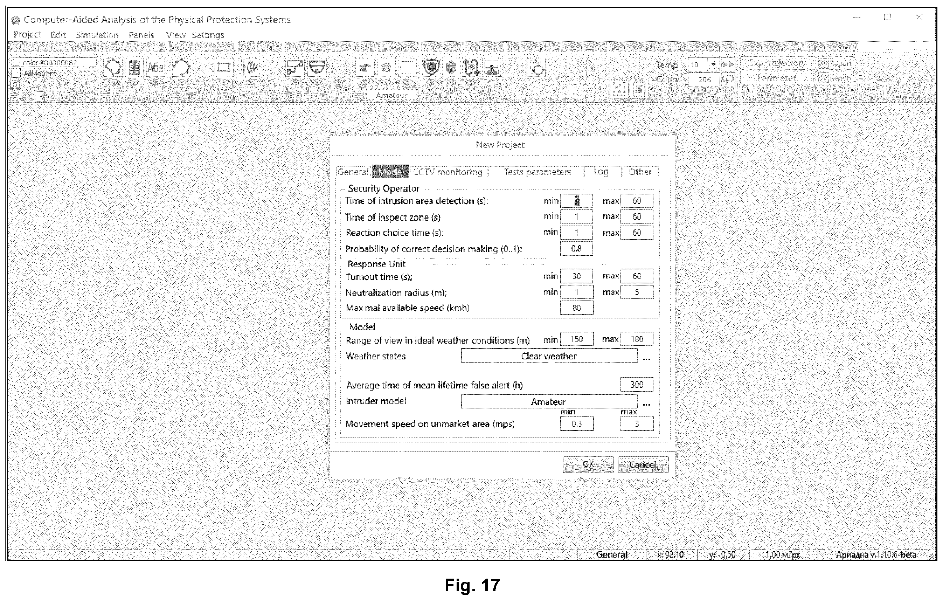

Fig. 17 shows the window for setting model parameters where global model settings are stated, e.g. time intervals and probabilities. Directly during model preparation you can enter more parameters and specializations. Journal tab is an actual record of the experimental procedure as "event log". This mode has animation o experiments and filters for output information that enable to exclude all false alerts or successful intruder interception.

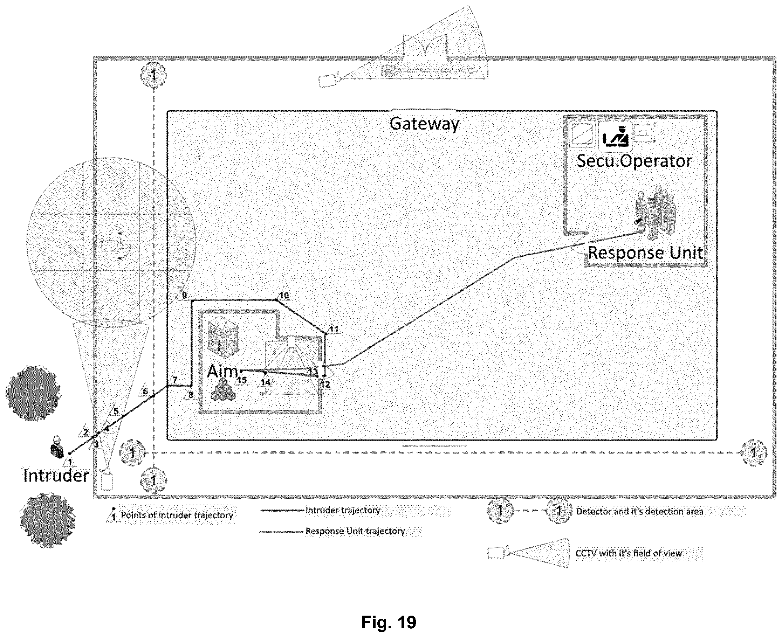

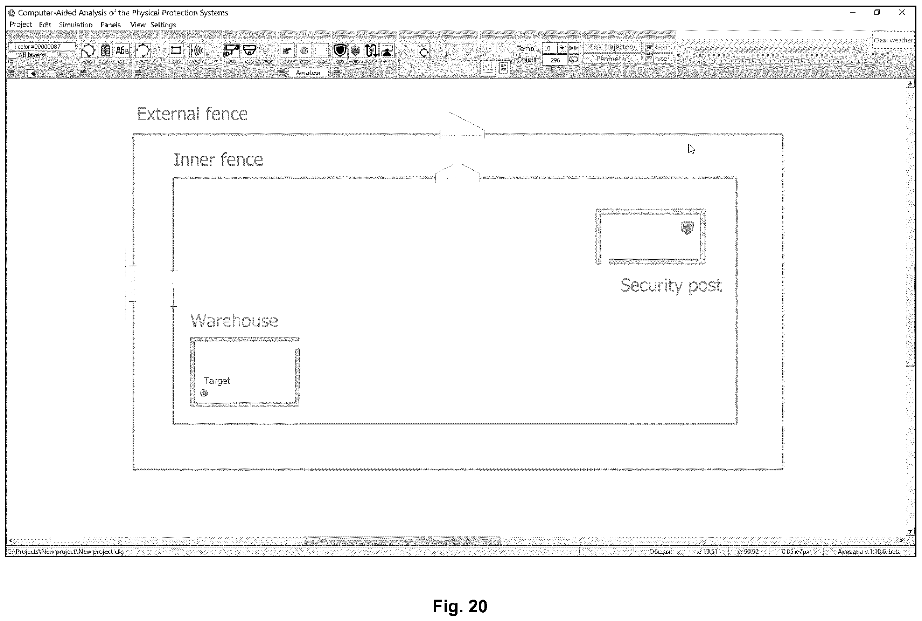

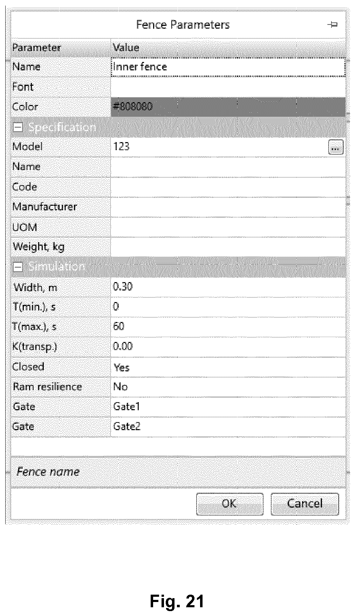

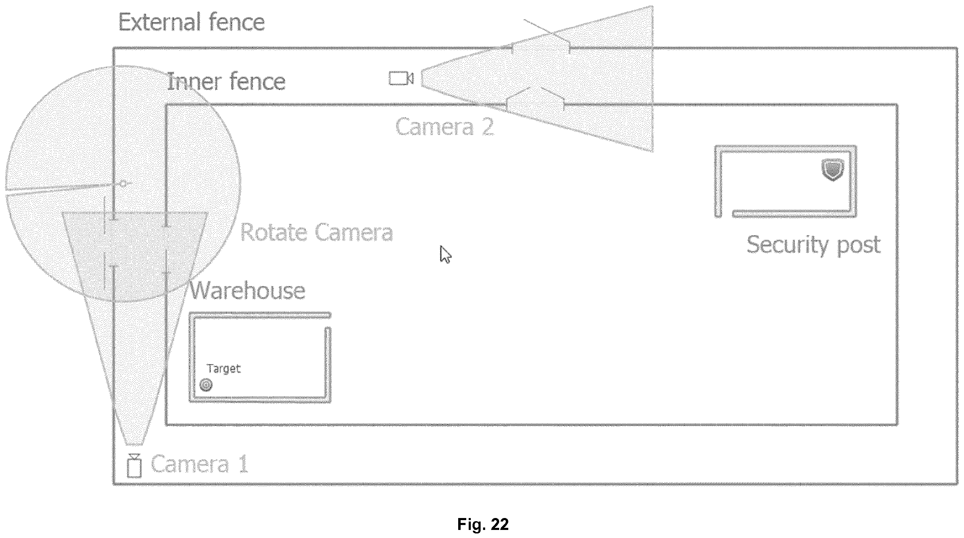

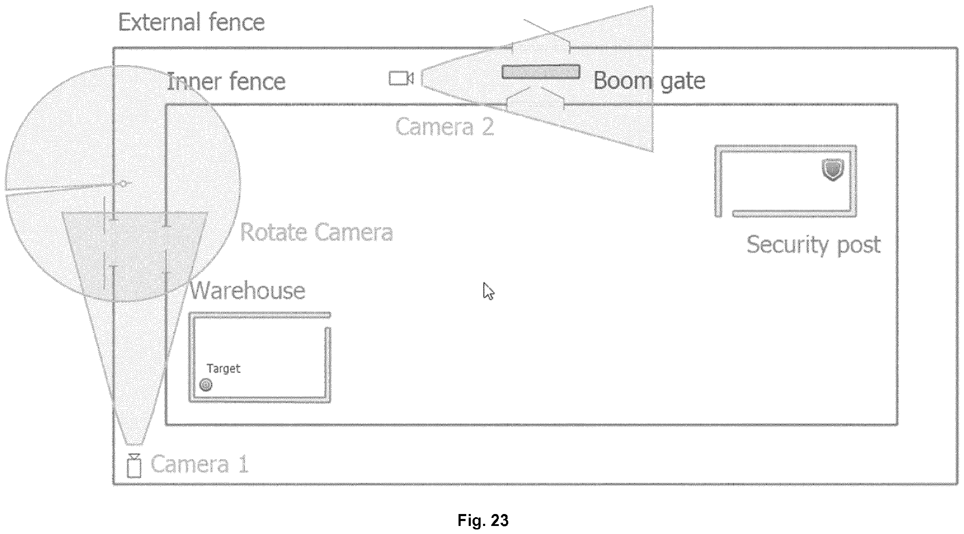

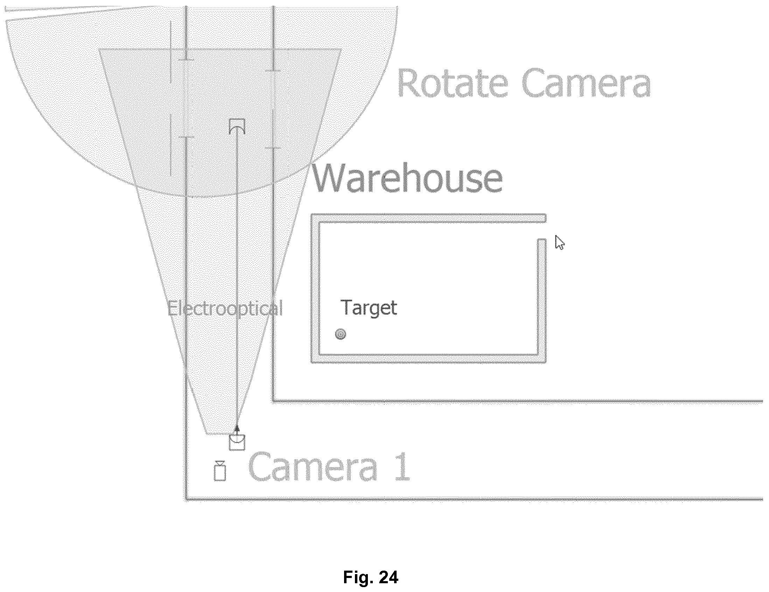

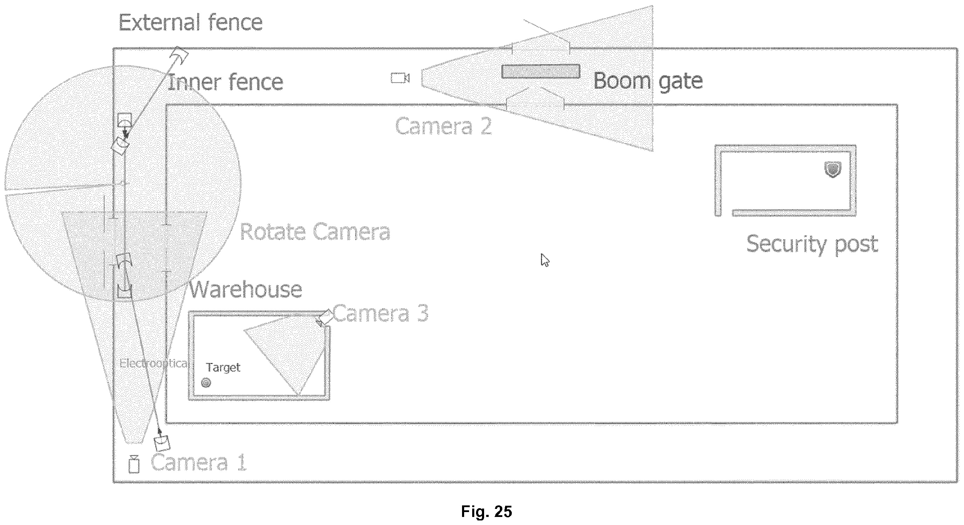

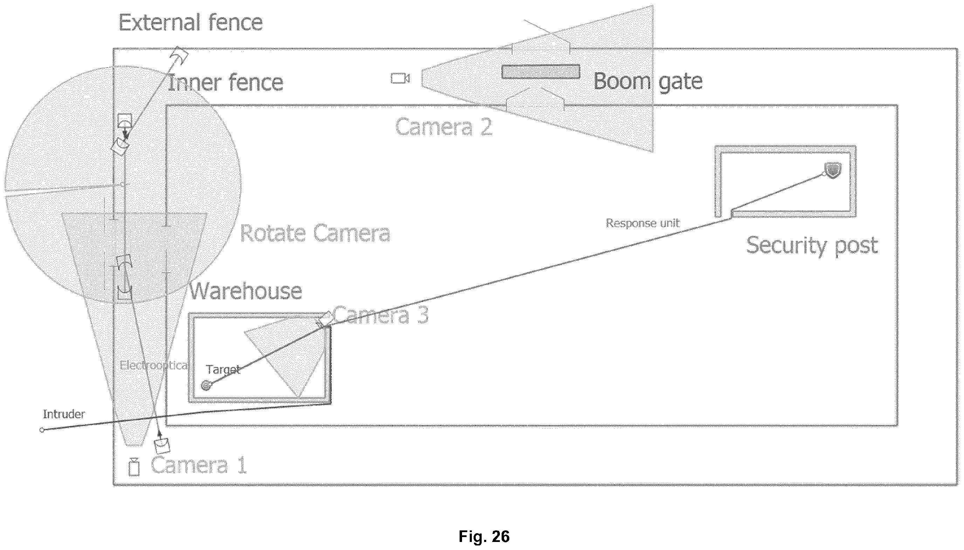

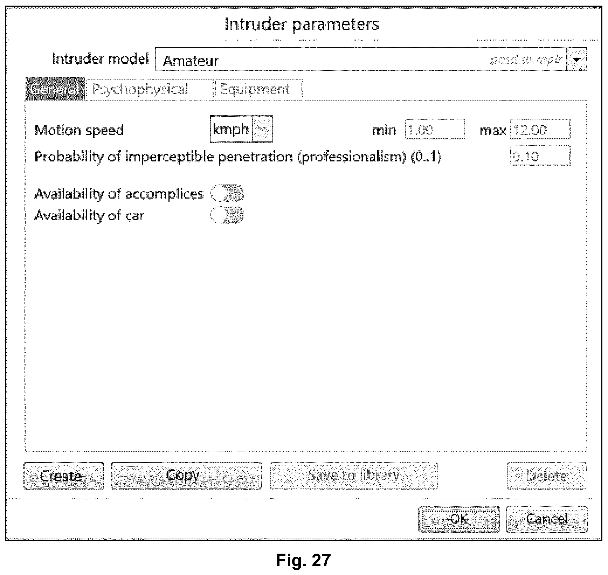

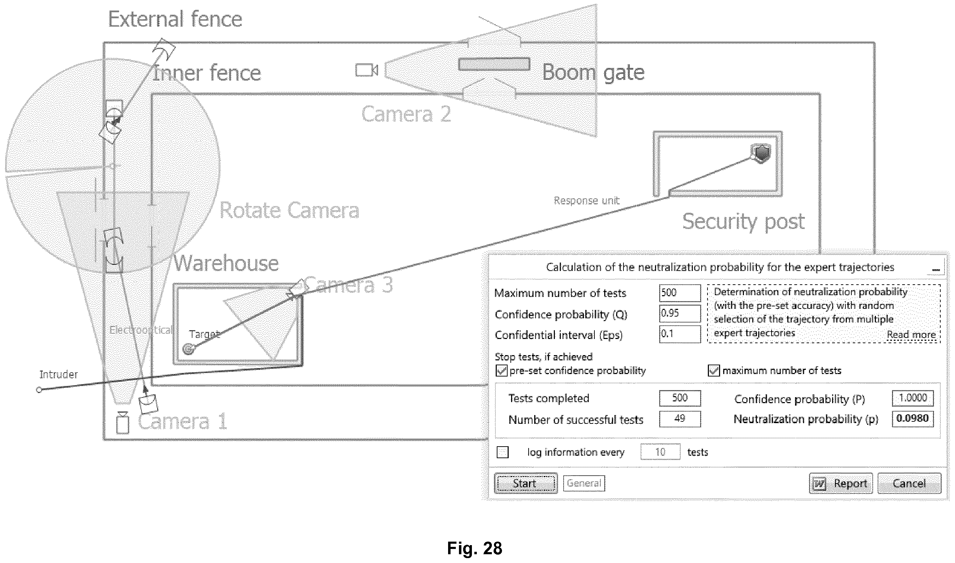

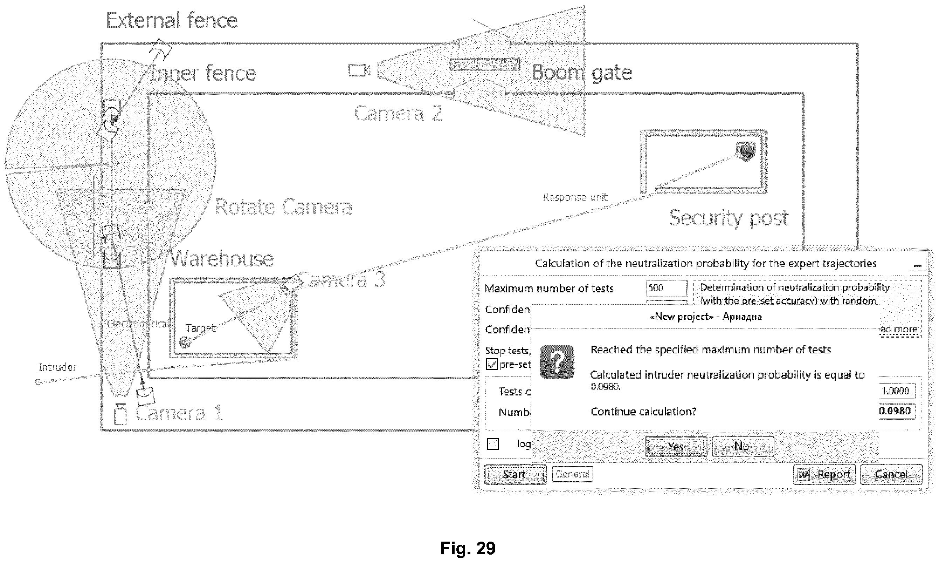

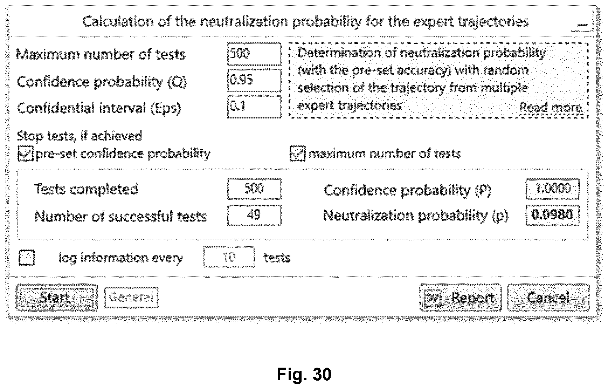

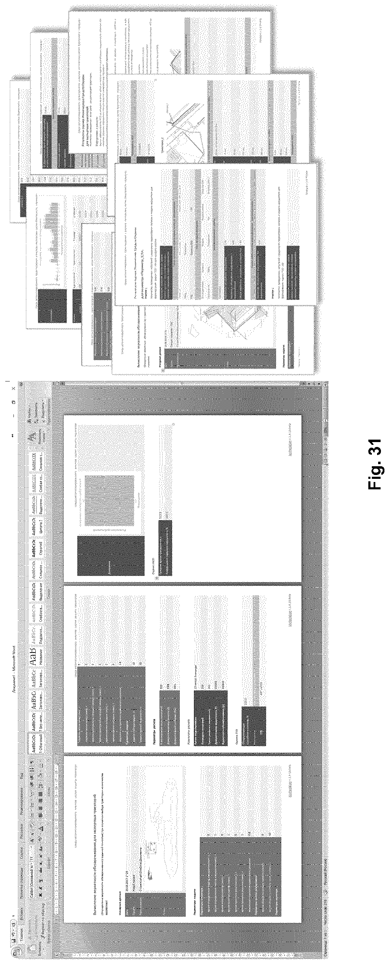

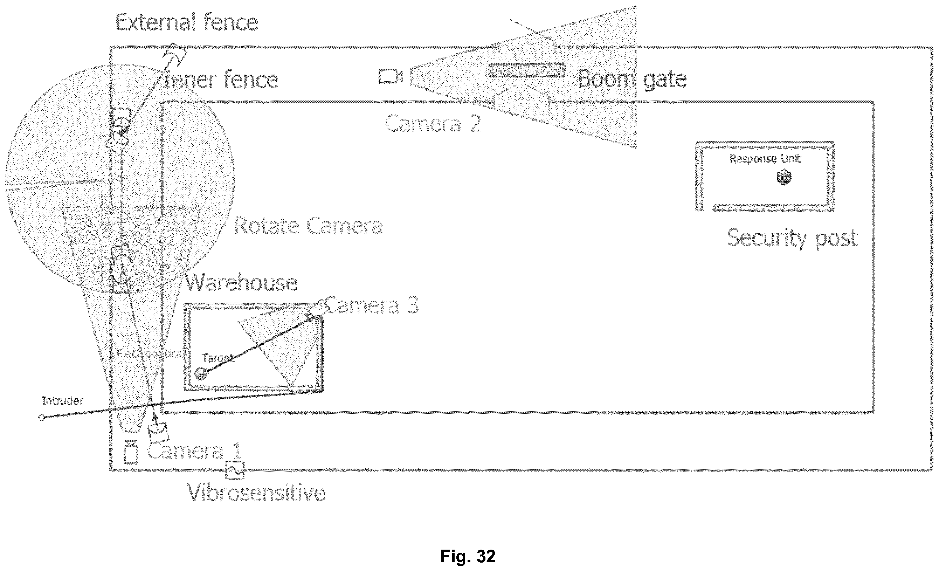

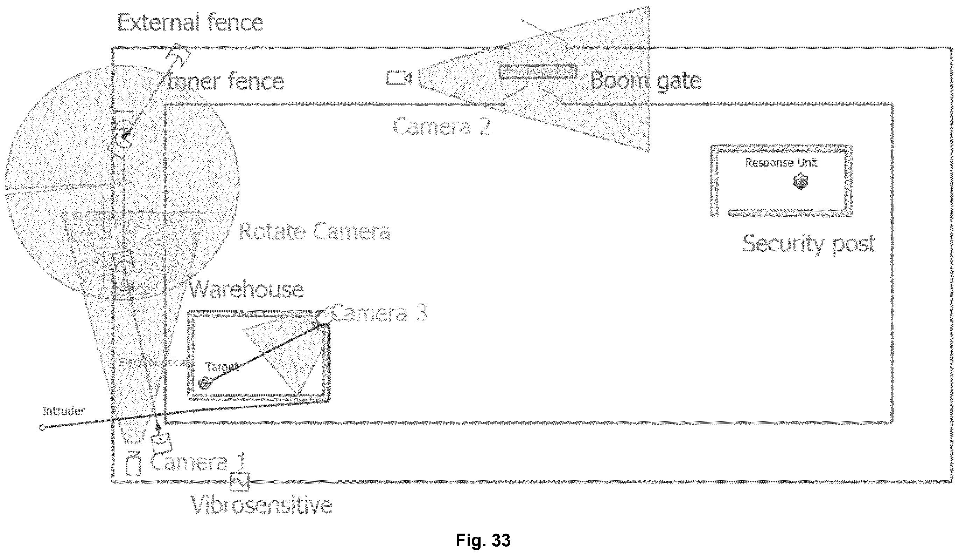

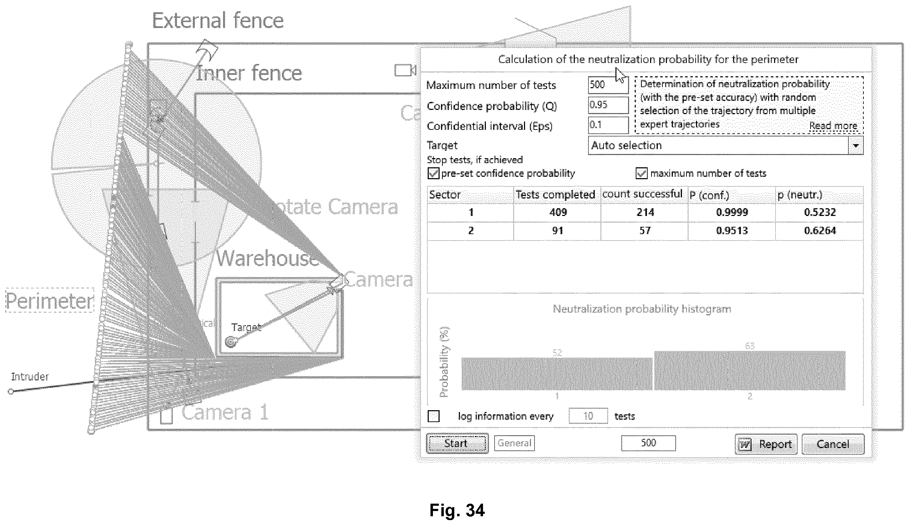

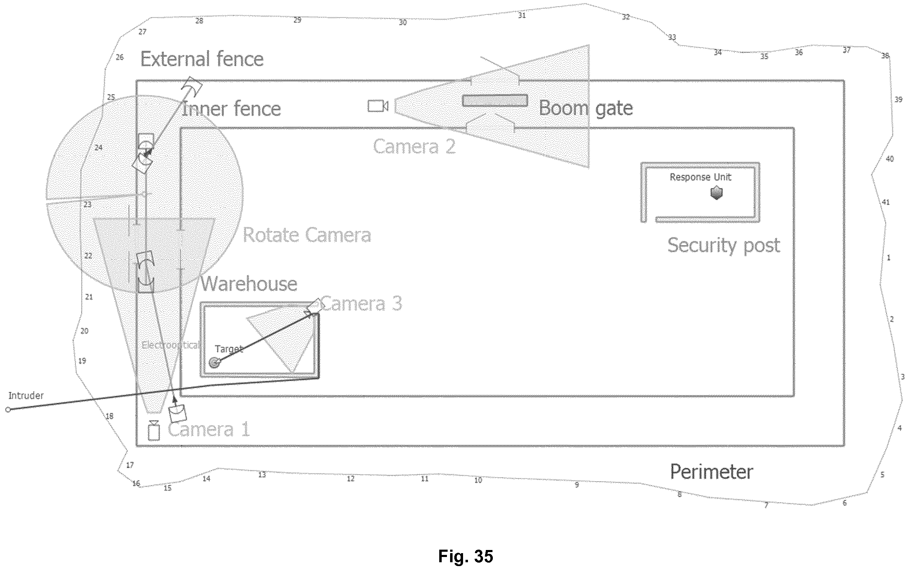

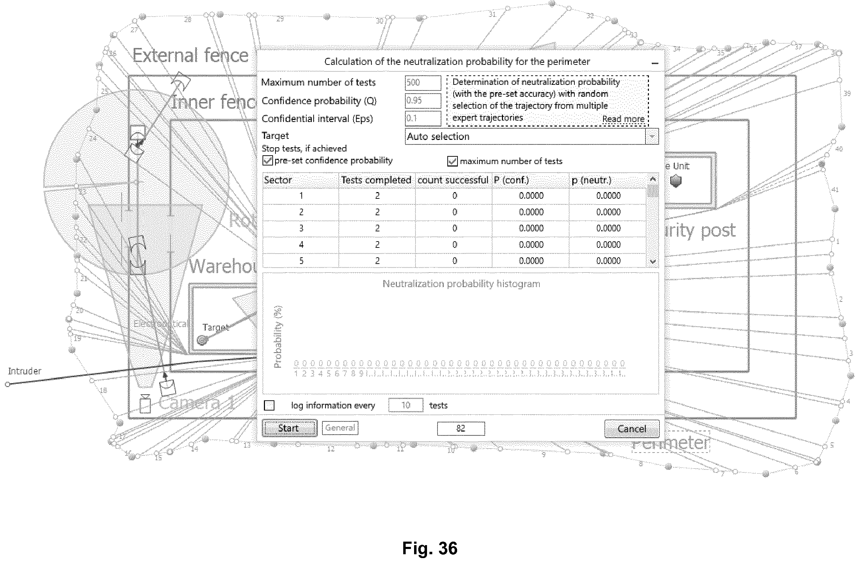

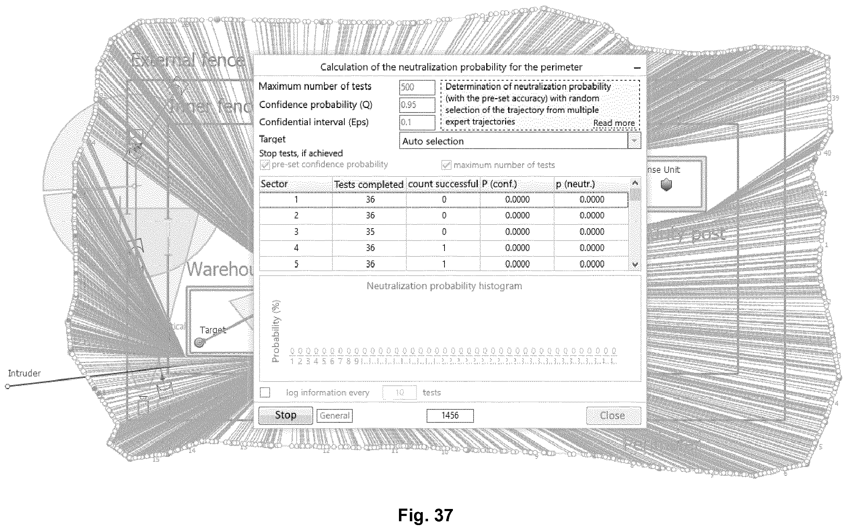

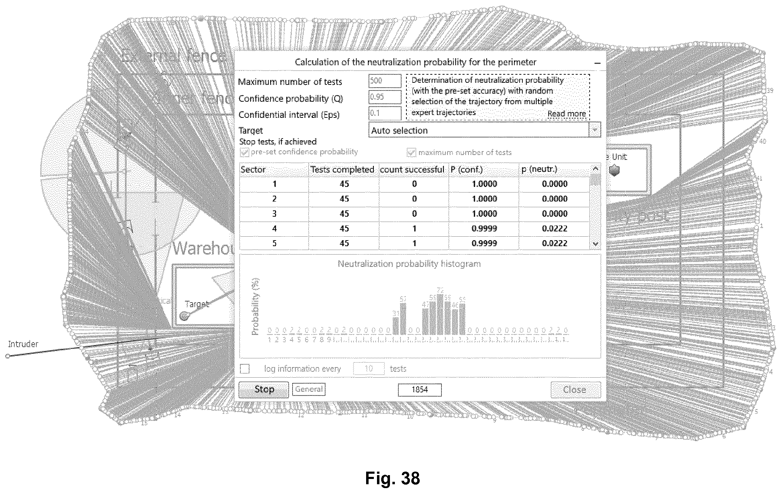

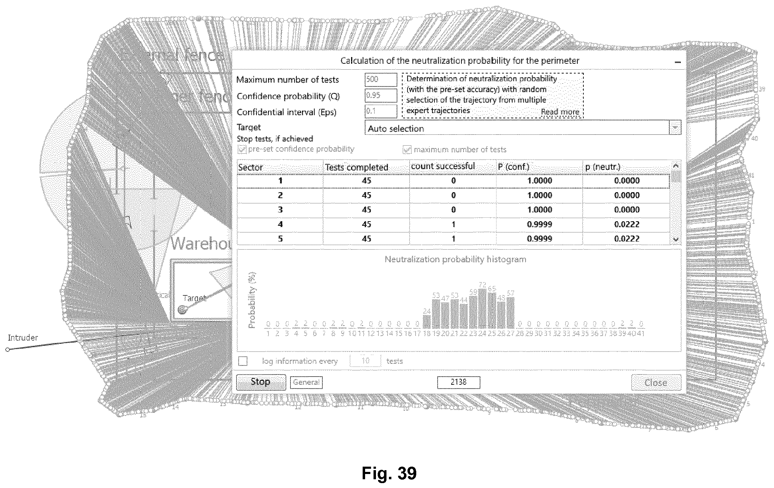

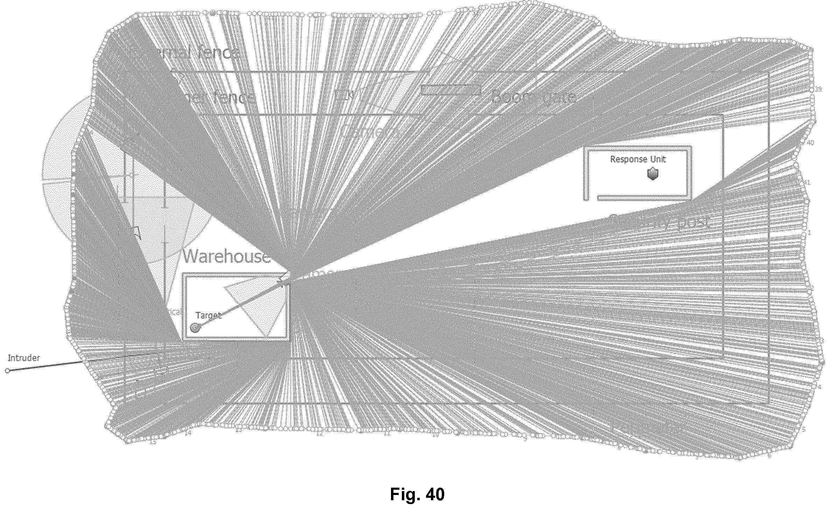

The facility with infrastructure is created with the pursued objectives indicated on it and the tasks to be carried out according to the plan (fig. 19). For this purpose a new project is created, a drawing is created on the basis of engineering security means: fences, buildings, gates, etc. (fig. 20). When creating each element special settings are set, the required model is connected, e.g. parameters of a fence, detectors, camera, etc. (fig. 21). Then infrastructure, ESM and SE of the facility is complicated, the intrusion target is set (Fig. 22), barriers (lifting gate) are installed (fig. 23), detectors are located and set, in the given case an electrooptical sensor) (fig. 24-25). Sensors' detection zones are crossed cross-wise in order to exclude a blind zone - a zone with decreased sensitivity near receivers and transmitters. We receive three-dimensional sensors' detection zone, i.e. if we zoom the plan, the sensitivity zone will be visible. The project is prepared for simulation, for this purpose the expert trajectory of intrusion trajectory is created (fig. 26), i.e. that trajectory that is "drawn by a designer" on the basis of his/her own experience and suppositions, and it is studied with participation of the response unit. The intruder model is selected (fig. 27). Simulation process of intrusion along the expert trajectory is carried out (fig. 28). The result of series of experiments on the trajectory with regard to the intrusion probability, i.e. reaching the probability that falls in the confidential interval, is shown in fig. 29). Graphical user interface provides the possibility to continue experiments or interrupt them. Result of expert trajectory study has shown the interception probability of almost 0.7, that is quiet low (fig. 30). The result is presented as a report (fig. 31). The same trajectory is studied but now a vibration-sensitive detector is added to a left lower angle of a fence (fig. 32) and the result of this study is shown (fig. 33). The result exceed 0.9 of interception probability, that is much better than the previous study with less number of sensors. The same area is studied but with random trajectories from this area (fig. 34). For this purpose two areas are created: intrusion perimeter where intruders are created randomly. From this perimeter they start to move towards to the target crossing barriers and avoiding buildings. In general, for the whole area with 1000 tests interception probability is 0.88 that is slightly less than the above stated result. It is obvious that this result is related to weak announcer protection of the area near the external gates and when crossing the internal gates as the major part of "red" trajectories cross this area. Red trajectories display unsuccessful interception, an intruder reached the target. A large intrusion perimeter is built with a large number of sectors around the facility (fig. 35). A large perimeter is studied by sectors (fig. 36) and simulation is carried out (fig. 37). Fig. 38 shows result of over 2,000 tests. Sectors 12-23 and 26-42 are not protected absolutely, as intruders cannot be detected or intercept timely. Fig. 39 shows result of over 5,000 tests. Thus, successful interception histogram is built. Intruders who go through the guard post are often intercepted, as the setting of intruder interception within the radius of 50 m from the guard post employee is configured. In this case there is a building wall with transparency factor of 0.7 (availability of windows and sound transparency) between them and an intruder, due to this fact they see or hear an intruder. Fig. 40 shows intrusion trajectories.

The software enables to generate a report file.

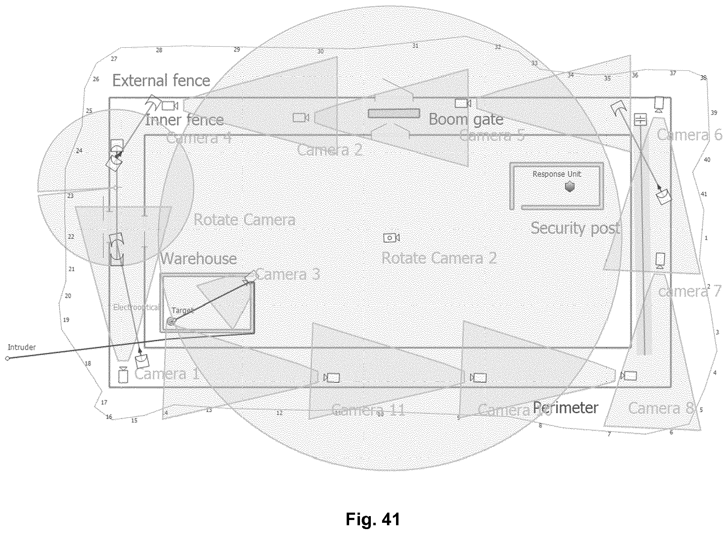

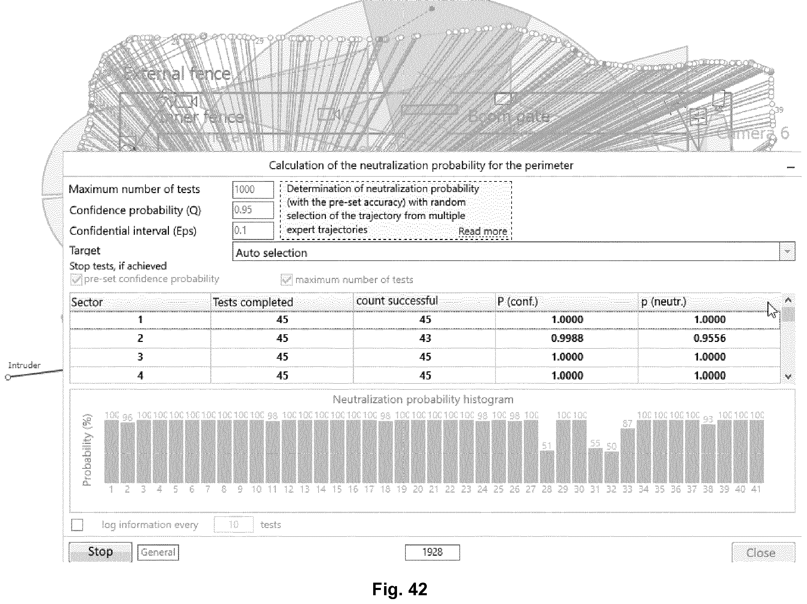

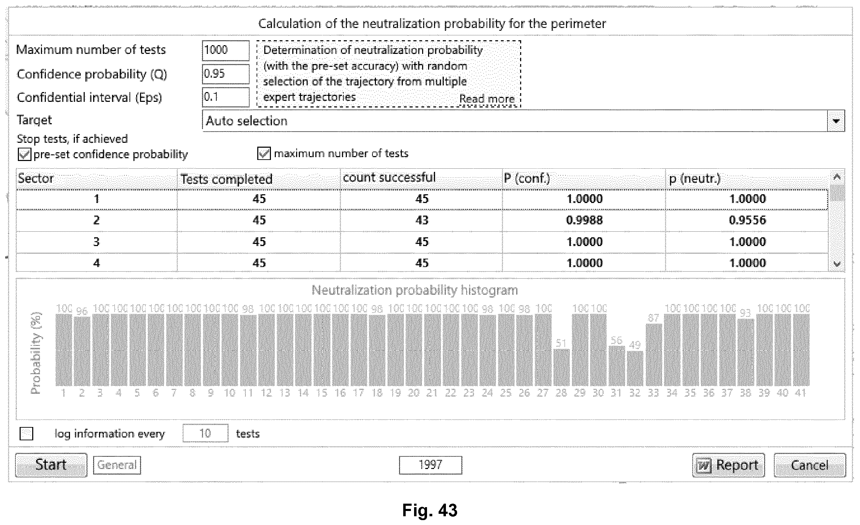

As this facility is unsatisfactory with regard to number of "defects" in the security system, it should be updated. For this purpose various types of cameras and detection, alerting systems, various detectors with different detection methods, detection zones, etc. are used (fig. 41). The result of study of such a facility - over 13,000 tests - is shown in fig. 42, and the result with over 14,000 tests is shown in fig. 43, i.e. the higher number of tests, the more accurate result. Sooner or later probability values will change in ten thousandth fractions, etc.

The calculation was carried out during almost two hours on the user personal computer. And it is clear that areas 41 and 42 have the worst protection. On this basis you can take measures on project correction. The ideal result is more even histogram with the largest number of successful interception in the area 25. However, the absolute maximum for the whole perimeter is unachievable with sophistication of the model and its approaching to reality, therefore the desired results are 98-99 percent.

Models of detectors, cameras, fences, intruders, specific areas, etc. can be implemented in the special editor. Plan of the facility to be guarded can be created over the loaded drawings. Wherein it is possible to bind lines, nodes and coordinates to the elements on the drawing that facilitates work when preparing the drawing for export. As a result, the main design documentation for the facility will be refined on the basis of this drawing. Also, simulation environment is capable to provide lists for specification.

Thus, the claimed method is implemented in the software product that is CAD with use of the technology of computational experiments conducting for assessment of the guarded facilities' PPS to be designed and vulnerability analysis. As opposed to any other currently existing software solutions this software application enables to create not only facility protection estimate according to actual intruder interception criterion, but also has the following advantages. It enables to assess operation of the built PPS with respect to interception capacity (intrusion counteracting) of engineering security means, with respect to detection capacity (reliable and timely detection) of the technical security equipment. It enables to carry out visual design of PPS on the facility map, to create materials to be included in the design documentation, change and set PPS structure to search for the most optimum combination with respect to system cost and efficiency. It enables to create its own libraries of PPS elements, models of intruders and the response unit (the security service) and to create a training firmware simulator complex to train specialists in the field of safety systems, training of security officers on the specific facilities. Thus, functionality of the firmware complex enhances.

If possible you can use the specific actual operating elements of technical security equipment, engineering security means and actual actions of an intruder and the security service instead of models of elements of technical security equipment, engineering security mean, an intruder and the security service.

The provided examples are special cases and do not exhaust all possible implementations of the declared facility.

The declared facility can be implemented using known devices and software products implemented, for example, using API. All data transmitted between user PCs, server and data base can be implemented using known communication networks on the basis of protocols that the person skilled in the art knows well.

The person skilled in the art must understand that various options of the declared system do not change nature of the invention, but only determine its specific implementations and applications.

## Claims

1. The method of computer-aided design and analysis of physical protection systems and the whole safety systems, wherein libraries of dynamic mathematical models of technical security equipment, engineering security means, intruders and security service are created, the model of the facility to be guarded is created, in the territory of the facility to be guarded elements of technical security equipment and engineering security means are created, security service dynamic mathematical model is set, threat dynamic mathematical model is created, within the scope of which intruders dynamic mathematical models are set, simulation is carried out, and then facility vulnerability estimate is created.

2. The method according to claim 1, *wherein* after facility vulnerability estimate dynamic mathematical models of technical security equipment, engineering security means and security service are updated.

3. The method according to claim 1, *wherein* plan project is exported to the elements of the design documentation.

4. The method according to claim 1, *wherein* mathematical models of the specific areas and infrastructure are additionally created.

5. The method according to claim 1, *wherein* for it the expert trajectory of intruder motion is taken into account.

6. The method according to claim 1, *wherein* for it the expert trajectory of security service motion is taken into account.

7. The method according to claim 1, *wherein* for it the random trajectory of intruder motion is taken into account.

8. Method according to claim 1, wherein actual operating element of technical security equipment, engineering security mean, intruder and security service can be used as a dynamic mathematical model of technical security equipment, engineering security mean, intruder and security service within the method.
